# EUROPEAN PATENT APPLICATION

(11) **EP 4 553 705 A2**
(43) Date of publication of application: **14.05.2025**
(21) Application number: 24223365.8
(22) Date of filing: 27.12.2024
(51) Int. Cl.: G06N 3/063

(54) **INSTRUCTION GENERATION METHOD AND APPARATUS AND ELECTRONIC DEVICE**

(30) Priority: 29.12.2023 CN 202311869130
(71) Applicant: Beijing Horizon Information Technology Co., Ltd., Beijing 100094 (CN)
(72) Inventor: Lin, Yongdi, Beijing, 100094 (CN)
(74) Representative: Patentanwälte Magenbauer & Kollegen Partnerschaft mbB

(57) **Abstract**

Disclosed are an instruction generation method and an electronic device. The method includes: determining an input memory layout and an output memory layout that correspond to a data transfer operator, and a transfer parameter of the data transfer operator; determining conversion path groups for converting the input memory layout to the output memory layout based on the transfer parameter, the input memory layout, the output memory layout, and multiple first layouts supported by a neural network processor; determining a target conversion path based on conversion path groups; and generating an instruction sequence executable by the processor based on the target conversion path. According to this disclosure, during processing of the data transfer operator, an optimal path can be determined from the path groups to serve as the target conversion path, the instruction sequence executable by the processor can be generated based on the target conversion path.

## Description

### FIELD OF THE INVENTION

This disclosure relates to the technical field of integrated circuits, and in particular, to an instruction generation method and apparatus and an electronic device.

### BACKGROUND OF THE INVENTION

Because a data storage manner of a neural network processor is different from that of a conventional processor (such as a CPU), processing a data transfer operator (such as reshape or transpose) on a neural network accelerator may be more complex than processing a data transfer operator on the conventional processor.

Taking processing of a transpose operator as an example, due to different data storage manners, compared to using the conventional processor, the neural network processor usually generates some additional reordering during the processing, and may have multiple processing manners for the same transpose operator. Quantities of reordering generated in different processing manners are different, and processing efficiency of different reordering also varies, resulting in different processing duration. In this case, how to improve efficiency of the neural network processor in processing the data transfer operator is a problem that urgently needs to be resolved.

### SUMMARY OF THE INVENTION

To resolve the foregoing technical problem, embodiments of this disclosure provide an instruction generation method and apparatus and an electronic device to improve processing efficiency of a neural network processor without changing the neural network processor by executing an instruction sequence executable by the neural network processor.

According to an aspect of this disclosure, an instruction generation method for a neural network processor is provided, including: determining an input memory layout and an output memory layout that correspond to a data transfer operator, and a transfer parameter of the data transfer operator; determining multiple conversion path groups for converting the input memory layout to the output memory layout based on the transfer parameter, the input memory layout, the output memory layout, and multiple first layouts supported by the neural network processor; determining a target conversion path based on the multiple conversion path groups; and generating an instruction sequence executable by the neural network processor based on the target conversion path.

Based on this solution, the input memory layout and the output memory layout that correspond to the data transfer operator and the transfer parameter of the data transfer operator are first determined; subsequently, the multiple conversion path groups are determined based on the transfer parameter, the input memory layout, the output memory layout, and the multiple first layouts supported by the neural network processor; and then the target conversion path is determined based on the multiple conversion path groups; and finally the executable instruction sequence is generated based on the target conversion path. The first layout supported by the neural network processor is used as an intermediate jump-off point for data format transformation, so that during the process of converting the input memory layout to the output memory layout, the multiple conversion path groups are determined based on the intermediate jump-off point, an optimal path is determined from the multiple conversion path groups to serve as the target conversion path, and further, the instruction sequence executable by the neural network processor is generated based on the target conversion path. Therefore, according to this disclosure, processing efficiency of the neural network processor can be improved without changing the neural network processor.

According to an aspect of this disclosure, a method for processing input data through a neural network processor is provided, including: determining an executable instruction sequence that is required for processing input data arranged according to an input memory layout, wherein the executable instruction sequence is generated based on a target conversion path, and the target conversion path is determined based on multiple conversion path groups for converting the input memory layout to an output memory layout; and performing, based on the executable instruction sequence, data transfer processing on the input data arranged according to the input memory layout by using the neural network processor, to obtain output data arranged according to the output memory layout.

Based on this solution, the executable instruction sequence is determined and the data transfer processing is performed on the input data arranged according to the input memory layout based on the executable instruction sequence, so as to obtain the output data arranged according to the output memory layout. In this way, a data transfer operator can be processed by using the neural network processor in the manner of shortest processing duration, thereby improving data processing efficiency.

According to another aspect of this disclosure, an instruction generation apparatus for a neural network processor is provided, including: a first determining module, configured to determine an input memory layout and an output memory layout that correspond to a data transfer operator, and a transfer parameter of the data transfer operator; a second determining module, configured to determine multiple conversion path groups for converting the input memory layout to the output memory layout based on the transfer parameter, the input memory layout, the output memory layout, and multiple first layouts supported by the neural network processor; a third determining module, configured to determine a target conversion path based on the multiple conversion path groups; and an instruction generation module, configured to generate an instruction sequence executable by the neural network processor based on the target conversion path.

According to an aspect of this disclosure, an apparatus for processing input data through a neural network processor is provided, including: a determining module, configured to determine an executable instruction sequence that is required for processing input data arranged according to an input memory layout, wherein the executable instruction sequence is generated based on a target conversion path, and the target conversion path is determined based on multiple conversion path groups for converting the input memory layout to an output memory layout; and a processing module, configured to perform, based on the executable instruction sequence, data transfer processing on the input data arranged according to the input memory layout by using the neural network processor, to obtain output data arranged according to the output memory layout.

According to an aspect of this disclosure, a computer readable storage medium is provided. The storage medium stores a computer program, and the computer program is used for implementing any one of the methods described above.

According to an aspect of this disclosure, an electronic device is provided. The electronic device includes: a processor; and a memory for storing processor-executable instructions, wherein the processor is configured to read the executable instructions from the memory, and execute the instructions to implement any one of the data processing methods described above.

### BRIEF DESCRIPTION OF THE DRAWINGS

FIG. 1 is a schematic diagram of a structure of an electronic device according to an exemplary embodiment of this disclosure;
FIG. 2 is a schematic diagram of a structure of another electronic device according to an exemplary embodiment of this disclosure;
FIG. 3 is a schematic flowchart 1 of an instruction generation method for a neural network processor according to an exemplary embodiment of this disclosure;
FIG. 4 is a schematic flowchart 2 of an instruction generation method for a neural network processor according to an exemplary embodiment of this disclosure;
FIG. 5 is a schematic flowchart 3 of an instruction generation method for a neural network processor according to an exemplary embodiment of this disclosure;
FIG. 6 is a schematic flowchart 4 of an instruction generation method for a neural network processor according to an exemplary embodiment of this disclosure;
FIG. 7 is a schematic flowchart 5 of an instruction generation method for a neural network processor according to an exemplary embodiment of this disclosure;
FIG. 8 is a schematic flowchart 6 of an instruction generation method for a neural network processor according to an exemplary embodiment of this disclosure;
FIG. 9 is a schematic flowchart 7 of an instruction generation method for a neural network processor according to an exemplary embodiment of this disclosure;
FIG. 10 is a schematic flowchart 1 of a method for processing input data through a neural network processor according to an exemplary embodiment of this disclosure;
FIG. 11 is a schematic flowchart 2 of a method for processing input data through a neural network processor according to an exemplary embodiment of this disclosure;
FIG. 12 is a schematic flowchart 3 of a method for processing input data through a neural network processor according to an exemplary embodiment of this disclosure;
FIG. 13 is a diagram of a structure of an instruction generation apparatus for a neural network processor according to an exemplary embodiment of this disclosure;
FIG. 14 is a diagram of a structure of an apparatus for processing input data through a neural network processor according to an exemplary embodiment of this disclosure; and
FIG. 15 is a diagram of a structure of an electronic device according to an exemplary embodiment of this disclosure.

### DETAILED DESCRIPTION OF THE EMBODIMENTS

Exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments described herein.

### Application overview

Typically, data in a conventional processor (such as a CPU) is stored in a memory in a form of an one-dimensional array or a two-dimensional array, and the data in the memory may be accessed through pointers or indexes. This storage manner is very flexible and facilitates various data operations.

A multidimensional array in a neural network processor is typically stored in the memory according to a specific layout. For example, the multidimensional array may be stored in multiple blocks, wherein one block may include multiple elements. This storage manner typically requires parallel processing, and therefore has higher processing efficiency and a faster computing speed, but also limits flexibility of the data operations.

It can be learned from the foregoing description that the data storage manner of the conventional processor is different from that of the neural network processor. In this way, operators (such as data transfer operators reshape and transpose) that are relatively easy to be processed on the conventional processor become difficult to be processed on the neural network processor.

Processes of processing data transfer operators in the conventional processor and in the neural network processor are described below.

The process of processing the conventional processor is described by taking the processing of a transpose operator as an example.

First, the conventional processor may determine, based on a transpose parameter of the transpose operator, dimensions of a multidimensional array [a, b, c, d] that is to be transferred by the transpose operator. For example, the transpose operator needs to transfer h and w dimensions of the multidimensional array [a, b, c, d]. b corresponds to the h dimension, c corresponds to the w dimension, the h dimension represents a height of the multidimensional array, and the w dimension represents a width of the multidimensional array. Subsequently, data corresponding to a, c, b, and d is read in an order of the multidimensional data [a, b, c, d], thereby implementing operation of the transpose operator.

Subsequently, the process of processing the neural network processor is described.

It may be learned from the foregoing data storage manner of the neural network processor that, in the case that the neural network processor is processing the transpose operator, the neural network processor needs to perform transposing simultaneously at a block level and within the block based on the transpose parameter of the transpose operator.

Generally, the neural network processor may process the transpose operator in various ways. When processing the transpose operator, different quantities of reorders may be generated in different processing manners, and different processing manners may also correspond to different processing duration.

For example, a layout of a multidimensional array [1, 3, 12, 9] is 2h16w8c. A multidimensional array [1, 12, 3, 9] may be obtained by using the transpose operator to swap an h dimension and a w dimension on the multidimensional data [1,3,12,9]. After being processed by using the transpose operator, the layout of the multidimensional array [1, 12, 3, 9] remains unchanged, and still is 2h16w8c.

It may be learned from the layout 2h16w8c of the multidimensional array [1, 3, 12, 9] that, the multidimensional array [1, 3, 12, 9] may be divided in oder to be stored in 1 × 2 × 2 blocks, wherein 1 × 2 × 16 × 8 pieces of data are stored in each block. After being transposed, the multidimensional array [1, 3, 12, 9] may be converted into the multidimensional array [1, 12, 3, 9]. A layout of the multidimensional array [1, 12, 3, 9] obtained through conversion is 16h2w8c, and the multidimensional array [1, 12, 3, 9] is divided into 1 × 1 × 2 × 2 blocks for storage, wherein 1 × 16 × 2 × 8 pieces of data are stored in each block.

Because the layout of the multidimensional array [1, 12, 3, 9] is 16h2w8c, to ensure that the layout of the multidimensional array [1, 12, 3, 9] after the transposing operation is still 2h16w8c, it is needed to convert the layout of the multidimensional array [1, 12, 3, 9] from 16h2w8c to 2h16w8c. In the process of converting 16h2w8c to 2h16w8c, additional reordering needs to be performed multiple times.

When performing the transposing operation on the multidimensional array [1, 3, 12, 9], the first processing manner may be selected. To be specific, the multidimensional array [1, 3, 12, 9] is first transposed to be converted into the multidimensional array [1, 12, 3, 9]. The layout of the multidimensional array [1, 12, 3, 9] is 16h2w8c. Subsequently, the layout 16h2w8c of the multidimensional array [1, 12, 3, 9] is transformed into 2h16w8c through a series of complex reordering.

In addition, the second processing manner may also be selected. To be specific, the layout 2h16w8c of the multidimensional array [1, 3, 12, 9] is first reordered to 16w16c; and then 16w16c is transposed to 16h16c by transposing; and finally, 16h16c is reordered twice to become 2h16w8c. It may be learned from execution duration corresponding to the foregoing two implementation manners that, the second implementation manner has shorter processing duration and higher processing efficiency.

Therefore, when using the neural network processor to implement operations on the data transfer operator, how to determine a manner with the shortest processing duration from multiple processing manners is a problem that urgently needs to be resolved.

### Exemplary device

Embodiments of this disclosure relate to a compilation-side device and a running-side device. The compilation-side device is configured to generate executable instructions for a neural network processor. The running-side device is configured to run the instructions provided by the compilation-side device to perform operations on a neural network. These operations include, but are not limited to: a convolution operation, a pooling operation, and a memory transfer operation.

In some embodiments, the compilation-side device may include, but is not limited to a personal computer, a server computer, a multi-processor system, and a microprocessor-based system.

In some embodiments, the running-side device may include, but is not limited to a neural network processor or a neural network chip.

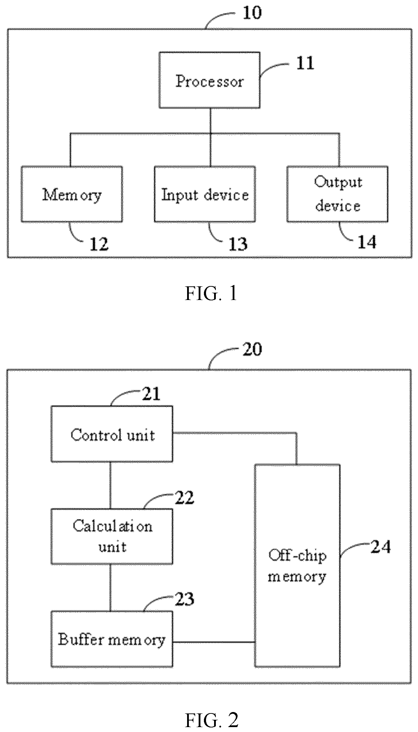

FIG. 1 is a schematic diagram of a structure of a compilation-side device 10 according to an embodiment of this disclosure. As shown in FIG. 1, the compilation-side device 10 includes at least one processor 11 and a memory 12.

The processor 11 is configured to implement an instruction generation method for a neural network processor according to the embodiments of this disclosure. The processor 11 may be a processor that supports instruction sequence compilation for the neural network, or another form of processing unit having a compilation processing capability and/or an instruction execution capability.

The memory 12 may include one or more computer program products, which may include various forms of computer readable storage media. One or more computer program instructions may be stored on the computer readable storage medium. The processor 11 may execute the program instructions to implement the instruction generation method for a neural network processor that is described below.

In some embodiments, as shown in FIG. 1, the compilation-side device 10 may further include an input device 13 and an output device 14. The input device 13 may include, for example, a keyboard and a mouse, for a compiler to input parameters of the neural network, such as a size of an input feature map, a size of an output feature map, and a convolution kernel at each layer of the neural network. The output device 14 may include, for example, a display, a speaker, a printer, a communication network, and a remote output device connected by the communication network, for the compiler to view a final compilation result or intermediate data during a compilation process.

It should be noted that a specific structure of the compilation-side device 10 is not limited in the embodiments of this disclosure. The compilation-side device 10 may include more or fewer components than those shown in FIG. 1. For example, the compilation-side device 10 may further include a bus, an input/output interface, and other components.

FIG. 2 is a schematic diagram of a structure of another running-side device 20 according to an embodiment of this disclosure. As shown in FIG. 2, the running-side device 20 may include a control unit 21 and a calculation unit 22. The control unit 21 is configured to execute instructions to control the calculation unit 22 to implement the following method for processing a multidimensional array through a neural network processor.

In some embodiments, the running-side device 20 may further include a buffer memory 23 and an off-chip memory 24. The buffer memory 23 may include one or more independent cache memories or a processing unit having a data caching capability, and may access the off-chip memory 24 under control of the control unit 21. The off-chip memory 24 may include one or more independent memories or a processing unit having a data storage capability, and may be accessed by the buffer memory 23 under control of the control unit 21.

It should be noted that a specific structure of the running-side device 20 is not limited in the embodiments of this disclosure. The running-side device 20 may include more or fewer components than those shown in FIG. 2. For example, the running-side device 20 may further include a bus and other components.

### Exemplary method

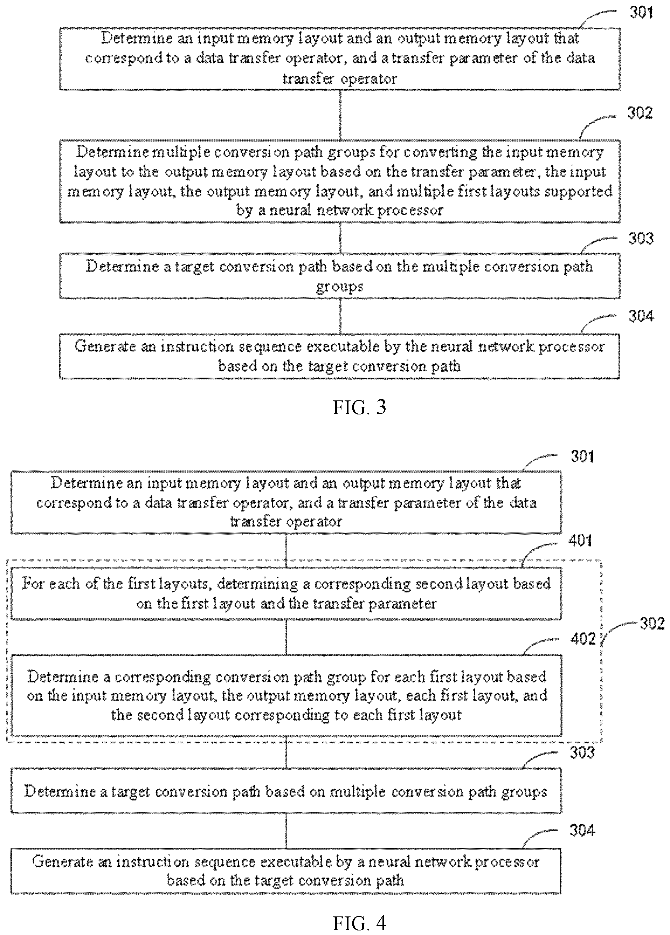

FIG. 3 shows an instruction generation method for a neural network processor according to an embodiment of this disclosure. The method may be applied to a compilation-side device. As shown in FIG. 3, the method includes the following steps 301 to 304.

Step 301. Determine an input memory layout and an output memory layout that correspond to a data transfer operator, and a transfer parameter of the data transfer operator.

For example, the input memory layout is a memory layout corresponding to input data of the data transfer operator, and the output memory layout is a memory layout expected for outputting output data of the data transfer operator. Because the memory layout of the data transfer operator after processing the input data may be different from the output memory layout, the memory layout may be converted through a target conversion path, so as to make sure that the memory layout of the output data is the output memory layout.

In some examples, the data transfer operator refers to an operator that changes a layout of a multidimensional array in a memory. For example, the data transfer operator may include a reshape operator, a transpose operator, and a Permute operator. A type of the data transfer operator is not limited in this embodiment of this application. The transfer parameter of the data transfer operator is used to indicate a dimension order of a transferred multidimensional array. For example, the transfer parameter is used to indicate swapping between an h dimension and a w dimension of the multidimensional array.

The reshape operator is used to reshape a matrix or an array to a specified shape. The transpose operator is used to perform a transposing operation on the matrix or the array. The Permute operator is used to rearrange dimensions of the matrix or the array.

The type of the data transfer operator is not limited in this embodiment of this application. The instruction generation method for a neural network processor provided in this disclosure is exemplarily described in the following embodiments by using an example in which the data transfer operator is a transpose operator.

For example, the input memory layout corresponding to the transpose operator is 2h16w8c. The output memory layout corresponding to the transpose operator is also 2h16w8c. The transfer parameter of the transpose operator is used to indicate an order of swapping the h and w dimensions of the multidimensional array.

Step 302. Determine multiple conversion path groups for converting the input memory layout to the output memory layout based on the transfer parameter, the input memory layout, the output memory layout, and multiple first layouts supported by the neural network processor.

The neural network processor is a device used to process a large amount of computing tasks in artificial intelligence applications. Although a processor (such as a CPU) has a certain data processing capability, for specific processing tasks, such as image processing and speech processing, the CPU has low execution efficiency and poor execution effects. Therefore, the neural network processor is required to perform the foregoing specific data operations.

For example, the neural network processor may be any accelerator capable of performing tensor operations. For example, the neural network processor may be a brain processing unit (BPU) or a neural network processing unit (NPU). The neural network processors may specifically include various types such as a graphics processing unit (GPU), a field-programmable gate array (FPGA), and an application-specific integrated circuit (ASIC). The neural network processors may be a homogeneous accelerator or a heterogeneous accelerator. Optionally, a type and a structure of the neural network processor are not specifically limited in the embodiments of the present invention. Exemplary description is made in the following embodiments by using an example in which the neural network processor is a BPU.

In some embodiments, a compilation-side device is used to compile and optimize operations of a function operator, so that the data transfer operator operates efficiently on the neural network processor. The compilation-side device may obtain the multiple first layouts supported by the neural network processor in advance, so as to determine the multiple conversion path groups for converting the input memory layout to the output memory layout based on the multiple first layouts supported by the neural network processor.

For example, the multiple first layouts supported by the neural network processor may be represented by using mid. The first layouts supported by the neural network processor are related to a hardware structure, a software architecture, a chip type, a chip process, and other parameters of the neural network processor. Specific types of the first layouts supported by the neural network processor are not limited in the embodiments of this application. The multiple first layouts supported by the neural network processor may include 2h16w8c, 256w, 16w16c, and other layouts.

After the multiple first layouts supported by the neural network processor are determined, the multiple conversion path groups for converting the input memory layout to the output memory layout may be determined based on the multiple first layouts, the transfer parameter, the input memory layout, and the output memory layout.

For example, the input memory layout may be represented by A, and the output memory layout may be represented by B. Because there are multiple first layouts, the multiple conversion path groups may be obtained based on the multiple first layouts, and one first layout may correspond to one conversion path group. A quantity of the conversion path groups is consistent with that of the first layouts.

For example, the first layouts are mid 1, mid 2, ..., and mid 10; and the multiple conversion path groups are: a conversion path group 1 corresponding to the mid 1, a conversion path group 2 corresponding to the mid 2, ..., and a conversion path group 10 corresponding to the mid 10.

Step 303. Determine a target conversion path based on the multiple conversion path groups.

In some examples, the target conversion path may be determined from the multiple conversion path groups based on the multiple conversion path groups. Optionally, when the input memory layout is converted into the output memory layout, a path with shortest processing duration is used as the target conversion path.

For example, after the conversion path group 1 corresponding to the mid 1, the conversion path group 2 corresponding to the mid 2, ..., and the conversion path group 10 corresponding to the mid 10 are obtained, the target conversion path may be determined based on the conversion path group 1, the conversion path group 2, ..., and the conversion path group 10.

Step 304. Generate an instruction sequence executable by the neural network processor based on the target conversion path.

When generating the instruction sequence executable by the neural network processor, the compilation-side device in the embodiments of this disclosure uses the first layout supported by the neural network processor as an intermediate jump-off point for data format transformation, so that during the process of converting the input memory layout to the output memory layout, the multiple conversion path groups are determined based on the intermediate jump-off point, an optimal path is determined from the multiple conversion path groups to serve as the target conversion path. Further, the instruction sequence executable by the neural network processor is generated based on the target conversion path. Therefore, according to this disclosure, processing efficiency of the neural network processor can be improved without changing the neural network processor.

In some embodiments, as shown in FIG. 4, step 302 may include steps 401 and 402.

Step 401. For each of the first layouts, determining a corresponding second layout based on the first layout and the transfer parameter.

It may be learned from the above that, during processing of the data transfer operator, data transfer may be directly performed on the input data arranged according to the input memory layout based on the transfer parameter, and then a layout of the transferred data may be converted into the required output memory layout. For example, the input memory layout of the input data is 2h16w8c, and the expected (or required) output memory layout of the output data is 2h16w8c. The transfer parameter is used to indicate an order of swapping the h and w dimensions. Based on the transfer parameter, after data transfer is performed on the input data, the layout of the transferred input data is 16h2w8c. Subsequently, the layout 16h2w8c of the transferred data is converted into the required output memory layout 2h16w8c through a series of complex reordering.

In addition, the data transfer operator may also be processed in other ways. Specifically, the input data arranged according to the input memory layout is first converted into input data arranged according to the first layout; and then data transfer is performed on the input data arranged according to the first layout; and finally, the layout of the transferred data is converted into the required output memory layout. For example, if the first layout is 16w16c, the input memory layout 2h16w8c of the input data may be first reordered to 16w16c. Subsequently, data transfer may be performed on the input data arranged according to 16w16c to obtain transferred data with a layout of 16h16c. Finally, the layout 16h16c of the transferred data may be reordered twice to obtain the required output memory layout 2h16w8c.

To improve processing efficiency of the neural network processor, a conversion path for converting the input memory layout to the output memory layout may be: first converting the input memory layout to the first layout, and then converting the first layout to the second layout, and finally converting the second layout to the output memory layout.

In some examples, the second layout is obtained by performing data transfer on the first layout based on the transfer parameter.

For example, the second layout may be represented by using mid'. In the case that there are multiple first layouts, there are also multiple second layouts, and one first layout may correspond to one second layout. For example, the second layout may include 2w16h8c, 256 h, 16 h16c, and other layouts. In the case that the multiple first layouts are mid 1, mid 2, ..., and mid 10, the multiple second layouts are mid 1', mid 2', ..., and mid 10'. The mid 1 corresponds to the mid 1', the mid 2 corresponds to the mid 2', and the mid 10 corresponds to the mid 10'.

Step 402. For each of the first layouts, determine a corresponding conversion path group based on the input memory layout, the output memory layout, the first layout, and the second layout corresponding to the first layout.

It may be learned from step 401 that, the conversion path for converting the input memory layout to the output memory layout is: first converting the input memory layout to the first layout, and then converting the first layout to the second layout, and finally converting the second layout to the output memory layout.

It may be learned from the conversion path for converting the input memory layout to the output memory layout that, in the case that there are multiple first layouts, there are also multiple corresponding conversion paths. Therefore, the first layout may be used as a benchmark to determine the corresponding conversion path group for each first layout, so as to obtain a final target conversion path based on the multiple conversion path groups.

In some examples, the conversion path group corresponding to a first layout may be obtained based on the input memory layout, the output memory layout, this first layout, and the second layout corresponding to this first layout. Manners for obtaining the conversion path groups corresponding to other first layouts are similar.

In the embodiments of this disclosure, when determining the multiple conversion path groups, for each first layout, the corresponding second layout may be first obtained based on the first layout and the transfer parameter, and then the conversion path group corresponding to the first layout may be obtained based on the input memory layout, the output memory layout, the first layout, and the second layout corresponding to the first layout. In other words, in this disclosure, the second layout corresponding to each first layout is obtained based on the transfer parameter, so as to determine all elements involved in the conversion path group, thereby providing a data basis for subsequent data transfer processing.

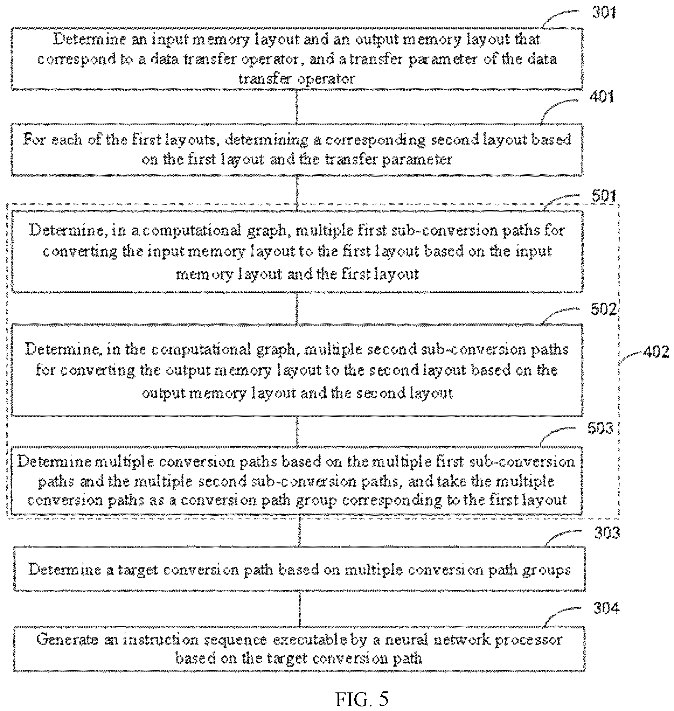

As shown in FIG. 5, step 402 may include steps 501 to 503.

Step 501. Determine, in a computational graph, multiple first sub-conversion paths for converting the input memory layout to the first layout based on the input memory layout and the first layout.

The computational graph is used to represent at least one conversion path corresponding to conversion of different layouts.

For example, based on the input memory layout and the first layout, in the case that it is determined in the computational graph to convert the input memory layout to the first layout, one or multiple first sub-conversion paths corresponding to converting the input memory layout to the first layout may be obtained.

In some examples, the computational graph may include multiple conversion paths, each of which may correspond to an edge and an edge weight. The edge is used to connect two different layouts. The edge weight is used to represent conversion duration required for converting two different layouts.

Exemplary description is made below by using the process of determining the conversion path group corresponding to one first layout as an example. Manners for determining conversion path groups corresponding to other first layouts are similar, and details are not described below.

It may be learned from step 401 that, the conversion path for converting the input memory layout to the output memory layout includes three parts. The first part is to convert the input memory layout to the first layout. The second part is to convert the first layout to the second layout. The third part is to convert the second layout to the output memory layout. For example, the first part is A->mid. The second part is mid->mid'. The third part is mid'->B.

Therefore, after the multiple first layouts supported by the neural network processor are obtained, the multiple first sub-conversion paths corresponding to the first part may be first determined based on the computational graph.

For example, the multiple first sub-conversion paths may be obtained based on the computational graph. The multiple first sub-conversion paths include a first sub-conversion path 1, a first sub-conversion path 2, ..., and a first sub-conversion path n. If the first layout is the mid 1, the first part is A->mid 1. The first sub-conversion path 1 may be A->C->mid 1. The first sub-conversion path 2 may be A->C->D->mid 1. The first sub-conversion path n may be A->E->mid 1.

Step 502. Determine, in the computational graph, multiple second sub-conversion paths for converting the output memory layout to the second layout based on the output memory layout and the second layout.

For example, based on the output memory layout and the second layout, in the case that it is determined in the computational graph to convert the output memory layout to the second layout, one or multiple second sub-conversion paths for converting the output memory layout to the second layout may be obtained.

Referring to step 501, after the second layout corresponding to the first layout is determined, the multiple second sub-conversion paths corresponding to the third part may be obtained based on the computational graph.

For example, the multiple second sub-conversion paths may be obtained based on the computational graph. The multiple second sub-conversion paths include a second sub-conversion path 1, a second sub-conversion path 2, ..., and a second sub-conversion path n. If the first layout is the mid 1, the third part is B-<mid 1'. The second sub-conversion path 1 may be B -<F-<mid 1'. The second sub-conversion path 2 may be B -<F-<G-<mid 1'. The second sub-conversion path n may be B -<H-<mid 1'.

Step 503. Determine multiple conversion paths based on the multiple first sub-conversion paths and the multiple second sub-conversion paths, and take the multiple conversion paths as the conversion path group corresponding to the first layout.

It may be learned from step 401 that, the second layout is obtained by performing data transfer on the first layout based on the transfer parameter. Further, in combination with step 501, the second part only corresponds to one path that is from the first layout to the second layout, that is, mid->mid 1'. Therefore, after the multiple first sub-conversion paths corresponding to the first part and the multiple second sub-conversion paths corresponding to the third part are obtained, multiple conversion paths corresponding to one first layout may be obtained. The multiple conversion paths may form a conversion path group corresponding to this first layout.

For example, in combination with steps 501 and 502, if the first layout is the mid 1, the conversion path corresponding to the mid 1 is A->mid 1->mid 1'->B. The conversion path group 2 corresponding to the mid 2 is A->mid 2->mid 2'->B. The conversion path group 10 corresponding to the mid 10 is A->mid 10->mid 10'->B.

The conversion path group corresponding to one first layout may include multiple conversion paths. For example, when the first layout is the mid 1, the multiple conversion paths included in the conversion path group corresponding to the mid 1 may be a conversion path 1, a conversion path 2, a conversion path 3, a conversion path 4, a conversion path 5, a conversion path 6, a conversion path 7, a conversion path 8, and a conversion path 9.

The conversion path 1 is obtained by combining the first sub-conversion path 1 and the second sub-conversion path 1. The conversion path 1 is A->C->mid 1->mid 1' ->F->B.

The conversion path 2 is obtained by combining the first sub-conversion path 1 and the second sub-conversion path 2. The conversion path 2 is A->C->mid 1->mid 1' ->G->F->B.

The conversion path 3 is obtained by combining the first sub-conversion path 1 and the second sub-conversion path n. The conversion path 3 is A->C->mid 1->mid 1' ->H->B.

The conversion path 4 is obtained by combining the first sub-conversion path 2 and the second sub-conversion path 1. The conversion path 4 is A->C->D->mid 1->mid 1' ->F->B.

The conversion path 5 is obtained by combining the first sub-conversion path 2 and the second sub-conversion path 1. The conversion path 5 is A->C->D->mid 1->mid 1' ->G->F->B.

The conversion path 6 is obtained by combining the first sub-conversion path 2 and the second sub-conversion path 1. The conversion path 6 is A->C->D->mid 1->mid 1' ->H->B.

The conversion path 7 is obtained by combining the first sub-conversion path n and the second sub-conversion path 1. The conversion path 7 is A->E->mid 1->mid 1' ->F->B.

The conversion path 8 is obtained by combining the first sub-conversion path n and the second sub-conversion path 1. The conversion path 8 is A->E->mid 1->mid 1' ->G->F->B.

The conversion path 9 is obtained by combining the first sub-conversion path n and the second sub-conversion path 1. The conversion path 9 is A->E->mid 1->mid 1' ->H->B.

The conversion paths 1 to 9 are all corresponding conversion paths when the first layout is the mid 1. Therefore, the conversion path group 1 corresponding to the first layout mid 1 may be obtained based on the conversion paths 1 to 9. In other words, the conversion path group 1 corresponding to the mid 1 includes 9 conversion paths.

It may be understood that in the case that the first layout is the mid 2, the corresponding conversion path group is the conversion path group 2, which may also include at least one conversion path. By analogy, it may be concluded that the first layout is the conversion path group 3 corresponding to the mid 3, the first layout is the conversion path group 4 corresponding to the mid 4, ..., or the first layout is the conversion path group 10 corresponding to the mid 10.

In the embodiments of this disclosure, when determining the conversion path group corresponding to each first layout, the multiple first sub-conversion paths and the multiple second sub-conversion paths are sequentially determined, and finally the conversion path group is obtained in combination with the multiple first sub-conversion paths and the multiple second sub-conversion paths. This facilitates determining of a conversion path with shortest processing duration from multiple possible conversion paths, thereby improving the processing efficiency of the neural network processor.

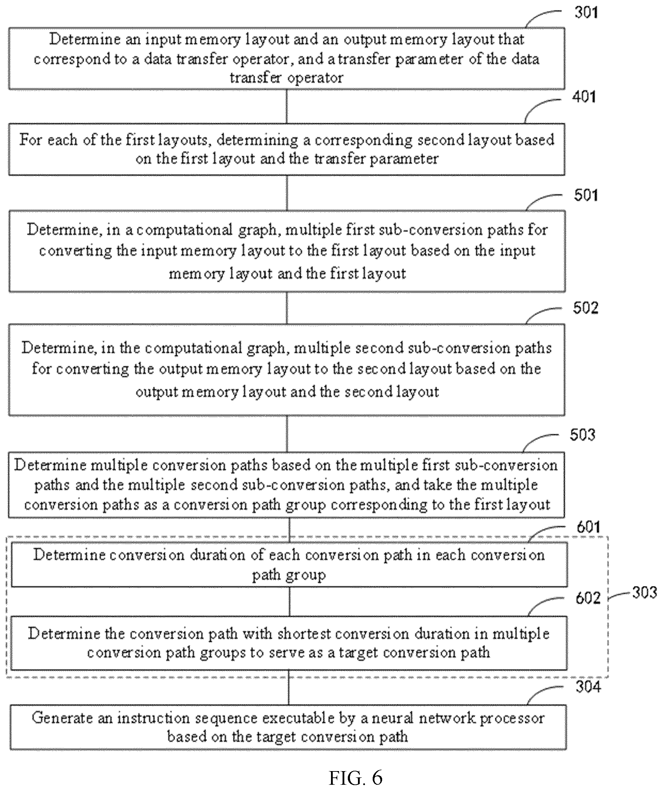

In some embodiments, as shown in FIG. 6, in combination with FIG. 5, step 303 may include steps 601 and 602.

Step 601. Determine conversion duration of each conversion path in each conversion path group.

In some examples, it may be learned from steps 501 to 503 that one first layout may correspond to one conversion path group. One conversion path group may include multiple conversion paths. After the multiple conversion paths are obtained, the conversion duration of the conversion path may be determined based on the conversion paths in the multiple conversion paths.

For example, determining the conversion duration of the conversion path based on the conversion paths in the multiple conversion paths may be: obtaining the conversion duration of each conversion path based on all conversion paths in the multiple conversion paths and the computational graph.

Step 602. Determine the conversion path with shortest conversion duration in the multiple conversion path groups to serve as the target conversion path.

According to step 601, the conversion duration of all conversion paths may be obtained sequentially. For example, conversion duration of all conversion paths in the conversion path group 1 (corresponding to the first layout mid 1), conversion duration of all conversion paths in the conversion path group 2 (corresponding to the first layout mid 2), ..., and conversion duration of all conversion paths in the conversion path group 10 (corresponding to the first layout mid 10) are obtained according to step 601, and then the conversion path with the shortest conversion duration in the multiple conversion path groups is determined as the target conversion path. For example, the target conversion path is the conversion path 3 in the conversion path group 1.

In the embodiments of this disclosure, the target conversion path may be determined based on the conversion duration of each conversion path. In this way, by comparing the conversion duration of various conversion paths, it may be ensured to some extent that the target conversion path is an optimal path for processing the data transfer operator.

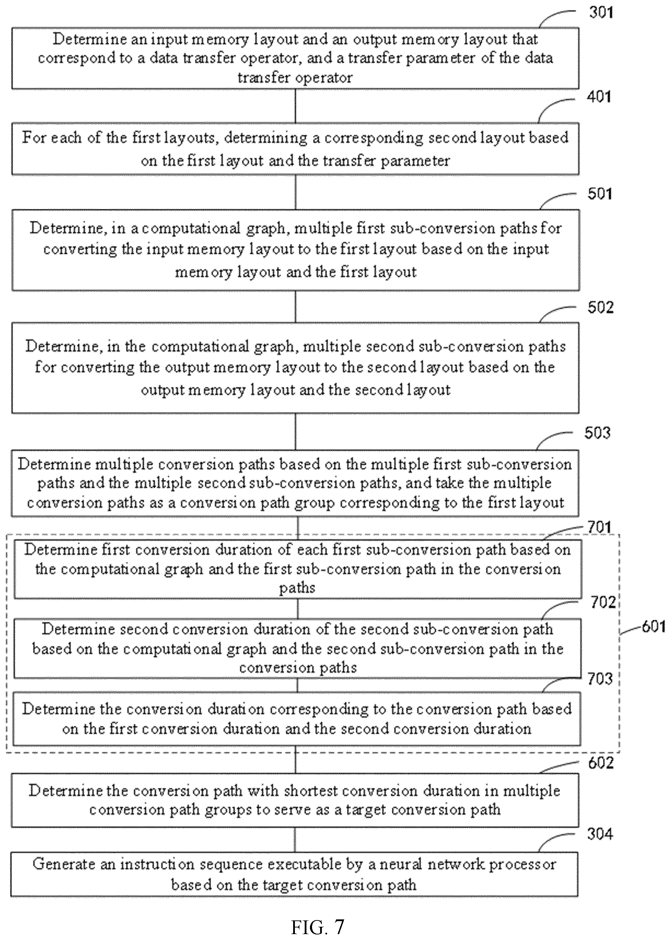

In some examples, as shown in FIG. 7, step 601 may include steps 701 to 703.

Step 701. Determine first conversion duration of each first sub-conversion path based on the computational graph and the first sub-conversion path in the conversion paths.

It may be learned from step 503 that, the conversion path in the conversion path group is obtained by combining the first sub-conversion path and the second sub-conversion path group, and how to determine a candidate conversion path is related to the conversion duration. Therefore, the first conversion duration of the first sub-conversion path may be determined based on the computational graph and the first sub-conversion path in each conversion path, second conversion duration of the second sub-conversion path may be determined based on the computational graph and the second sub-conversion path of each conversion path, and finally the conversion duration corresponding to the conversion path may be determined based on the first conversion duration and the second conversion duration.

It may be learned from step 501 that, the computational graph includes the edge weight corresponding to each conversion path, and the edge weight of each conversion path may represent conversion duration required for converting two different layouts. Therefore, the computational graph may be used to determine the first conversion duration of each first sub-conversion path in the conversion path.

For example, for the multiple first sub-conversion paths (that is, the first sub-conversion path 1, the first sub-conversion path 2, ..., and the first sub-conversion path n), the first conversion duration of each first sub-conversion path may be obtained based on the computational graph. For example, the first conversion duration of the first sub-conversion path 1 is t11, the first conversion duration of the first sub-conversion path 2 is t12, and the first conversion duration of the first sub-conversion path n is tin.

Step 702. Determine second conversion duration of the second sub-conversion path based on the computational graph and the second sub-conversion path in each conversion path.

With reference to step 701, for the multiple second sub-conversion paths (that is, the second sub-conversion path 1, the second sub-conversion path 2, ..., and the second sub-conversion path n), the second conversion duration of each second sub-conversion path may be obtained based on the computational graph. The second conversion duration of the second sub-conversion path 1 is t21, the second conversion duration of the second sub-conversion path 2 is t22, and the second conversion duration of the second sub-conversion path n is t2n.

Step 703. Determine the conversion duration corresponding to the conversion path based on the first conversion duration and the second conversion duration.

In some examples, after the conversion path group corresponding to the first layout is obtained, total conversion duration corresponding to each conversion path may be determined based on each conversion path in the conversion path group.

The total conversion duration corresponding to each conversion path is obtained based on the first conversion duration and the second conversion duration.

For example, after being obtained, the first conversion duration and the second conversion duration may be added together to obtain the total conversion duration corresponding to each conversion path.

For example, in combination with step 503, the mid 1 corresponds to the conversion path group 1, which includes conversion paths 1 to 9.

Because the conversion path 1 is obtained by combining the first sub-conversion path 1 and the second sub-conversion path 1, the total conversion duration corresponding to the conversion path 1 is t11+ t21. Because the conversion path 2 is obtained by combining the first sub-conversion path 1 and the second sub-conversion path 2, the total conversion duration corresponding to the conversion path 2 is t11+ t22. Because the conversion path 3 is obtained by combining the first sub-conversion path 1 and the second sub-conversion path n, the total conversion duration corresponding to the conversion path 3 is t11+ t2n. Because the conversion path 4 is obtained by combining the first sub-conversion path 2 and the second sub-conversion path 1, the total conversion duration corresponding to the conversion path 4 is t12+ t21. Because the conversion path 5 is obtained by combining the first sub-conversion path 2 and the second sub-conversion path 1, the total conversion duration corresponding to the conversion path 5 is t12+ t22. Because the conversion path 6 is obtained by combining the first sub-conversion path 2 and the second sub-conversion path 1, the total conversion duration corresponding to the conversion path 6 is t12+ t2n. Because the conversion path 7 is obtained by combining the first sub-conversion path n and the second sub-conversion path 1, the total conversion duration corresponding to the conversion path 7 is t1n+ t21. Because the conversion path 8 is obtained by combining the first sub-conversion path n and the second sub-conversion path 1, the total conversion duration corresponding to the conversion path 8 is t1n+ t22. Because the conversion path 9 is obtained by combining the first sub-conversion path n and the second sub-conversion path 1, the total conversion duration corresponding to the conversion path 9 is t1n+ t2n.

In the embodiments of this disclosure, the conversion duration of each conversion path in the conversion path group may be determined, so as to further obtain the target conversion path based on the conversion duration of each conversion path. Since processing the data transfer operator by using different conversion paths may directly affect the processing efficiency of the neural network processor, the processing efficiency of the neural network processor can be indirectly improved by using the candidate conversion path that is determined based on the conversion duration of each conversion path.

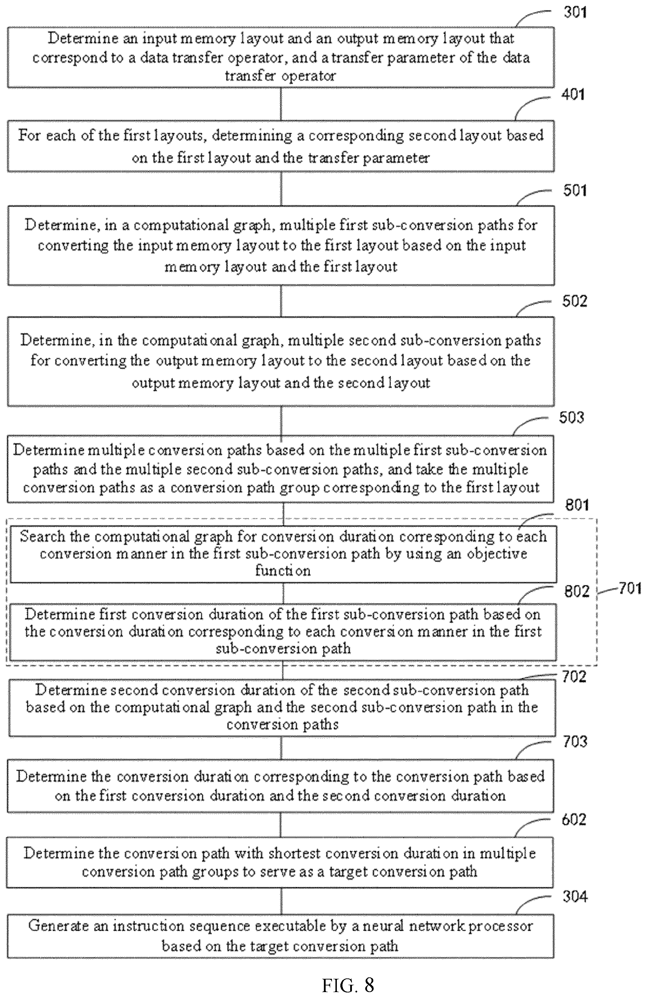

In some examples, as shown in FIG. 8, step 701 may include steps 801 and 802.

Step 801. Search the computational graph for conversion duration corresponding to each conversion manner in the first sub-conversion path by using an objective function.

In some examples, the conversion duration corresponding to each conversion manner in the first sub-conversion path may be searched in the computational graph by using the objective function.

It may be learned from step 501 that, the edge weight corresponding to each conversion path in the computational graph may represent the conversion duration required for converting two different layouts. Therefore, after the first sub-conversion path is determined, the edge weight corresponding to the first sub-conversion path may be searched in the computational graph by using the objective function, so as to obtain the conversion duration corresponding to each conversion manner in the first sub-conversion path.

For example, in the case that the mid 1 corresponds to the conversion path 1, the conversion path 1 includes the first sub-conversion path 1 and the second sub-conversion path 1. The first sub-conversion path 1 is A->C->mid 1. Therefore, the edge weight corresponding to each conversion manner in the first sub-conversion path 1 may be separately searched in the computational graph by using the objective function. For example, edge weights corresponding to A->C and C->mid 1 are searched in the computational graph respectively.

Step 802. Determine the first conversion duration of the first sub-conversion path based on the conversion duration corresponding to each conversion manner in the first sub-conversion path.

In some examples, after the conversion duration corresponding to each conversion manner in the first sub-conversion path is obtained, the conversion durations respectively corresponding to the conversion manners may be added together to obtain the first conversion duration of the first sub-conversion path.

For example, after being obtained, the edge weights corresponding to A->C and the edge weights corresponding to C->mid 1 may be added to obtain the conversion duration corresponding to the first sub-conversion path 1A->C->mid 1.

It may be understood that the manner for determining the second conversion duration of the second sub-conversion path is similar to that for determining the first conversion duration of the first sub-conversion path. For example, the conversion duration corresponding to each conversion manner in the second sub-conversion path is searched in the computational graph by using the objective function; and the second conversion duration of the second sub-conversion path is determined based on the conversion duration corresponding to each conversion manner in the second sub-conversion path.

For example, for the second sub-conversion path 1 in the conversion path 1, the second sub-conversion path 1 is mid1'->F->B. The edge weights corresponding to the conversion manners in the second sub-conversion path 1 may be respectively searched in the computational graph by using the objective function.

For example, edge weights corresponding B-<F and F-<mid 1' are searched in the computational graph separately. After being obtained, the edge weights corresponding to B-<F and F-<mid 1' may be added to obtain the conversion duration corresponding to the second sub-conversion path 1 mid 1'->F->B.

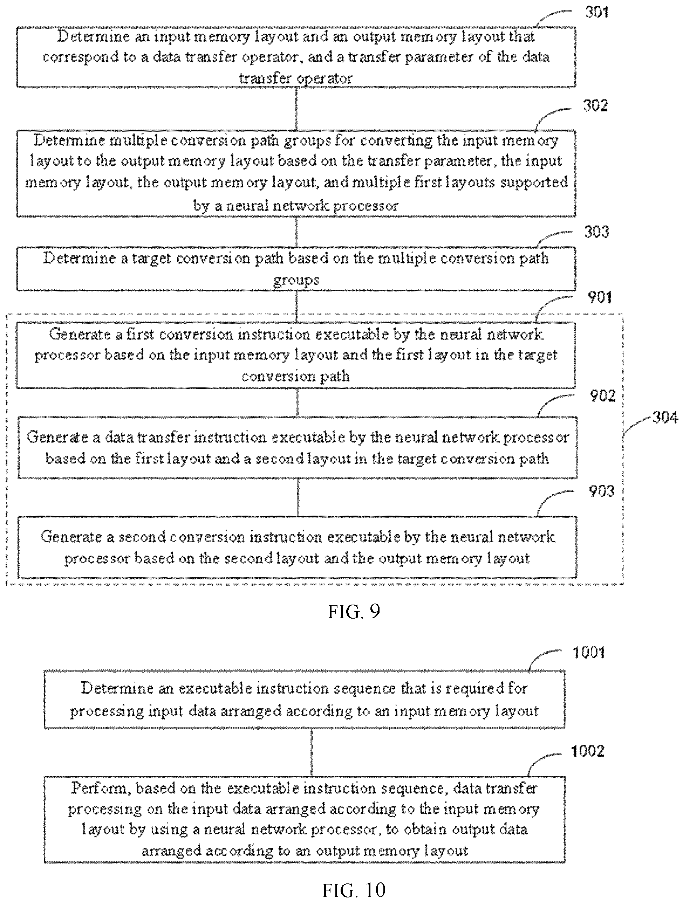

In some examples, as shown in FIG. 9, step 304 may include steps 901 to 903.

Step 901. Generate a first conversion instruction executable by the neural network processor based on the input memory layout and the first layout in the target conversion path.

The executable instruction sequence includes the first conversion instruction, the data transfer instruction, and a second conversion instruction.

After the target conversion path is determined, the first conversion instruction executable by the neural network processor may be generated based on the input memory layout and the first layout in the target conversion path. The first conversion instruction can be used to convert the input data arranged according to the input memory layout into input data arranged according to the first layout in the target conversion path. Since the target conversion path is a shortest path for implementing the data transfer operator, the first conversion instruction obtained through this manner may help the neural network processor process the data transfer operator by using the shortest processing duration.

Step 902. Generate a data transfer instruction executable by the neural network processor based on the first layout and the second layout in the target conversion path.

The second layout is determined based on the first layout and the transfer parameter.

After the target conversion path is determined, the data transfer instruction executable by the neural network processor may be generated based on the first layout and the second layout in the target conversion path. The data transfer instruction can be used to perform data transfer processing on the input data arranged according to the first layout, to obtain output data arranged according to the second layout in the target conversion path.

Step 903. Generate a second conversion instruction executable by the neural network processor based on the second layout and the output memory layout.

The second conversion instruction executable by the neural network processor may be generated based on the second layout in the target conversion path and the output memory layout in the target conversion path. The second conversion instruction can be used to convert the output data arranged according to the second layout into output data arranged according to the output memory layout.

The compilation-side device in the embodiments of this disclosure may generate the first conversion instruction, the data transfer instruction, and the second conversion instruction based on the input memory layout, the output memory layout, and the first layout and the second layout in the target conversion path when generating an instruction executable by an artificial intelligence accelerator. Since the first conversion instruction, the data transfer instruction, and the second conversion instruction all correspond to a smallest hardware unit of the neural network processor, when receiving the foregoing instructions, the neural network processor does not need to convert the instructions but directly performs operations on the input data. In this way, convenience of data processing is improved, thereby avoiding further conversion of the instruction, and improving computational efficiency.

FIG. 10 shows a method for processing input data through a neural network processor according to an embodiment of this disclosure. The method may be applied to a running-side device. As shown in FIG. 10, the method includes the following steps 1001 and 1002.

Step 1001. Determine an executable instruction sequence that is required for processing input data arranged according to an input memory layout.

The executable instruction sequence is generated based on a target conversion path, and the target conversion path is determined based on multiple conversion path groups for converting the input memory layout to an output memory layout.

In some embodiments, the executable instruction sequence includes at least a data transfer instruction. The data transfer instruction is used to perform data transfer processing on input data arranged according to a first layout in the target conversion path, to obtain output data arranged according to a second layout in the target conversion path. In this way, the neural network processor can be enabled to process the data transfer operator according to the target conversion path, thereby improving processing efficiency of the neural network processor.

After generating the executable instruction sequence, a compilation-side device may send the executable instruction sequence to the neural network processor directly, or send the executable instruction sequence to the neural network processor through a portable hard drive.

It should be noted that the executable instruction sequence includes a plurality of instructions, which may be the instructions executable by the neural network processor in any one of the embodiments shown in FIG. 3 to FIG. 9.

Step 1002. Perform, based on the executable instruction sequence, data transfer processing on the input data arranged according to the input memory layout by using the neural network processor, to obtain output data arranged according to an output memory layout.

After receiving the executable instruction sequence, the neural network processor executes the executable instruction sequence to perform data transfer processing on the input data arranged according to the input memory layout, so as to obtain the output data arranged according to the output memory layout.

According to the method for processing input data through a neural network processor provided in the embodiments of this disclosure, the executable instruction sequence for processing the input data is determined, so that data transfer is performed on the input data arranged according to the input memory layout by using the executable instruction sequence, so as to obtain the output data arranged according to the output memory layout.

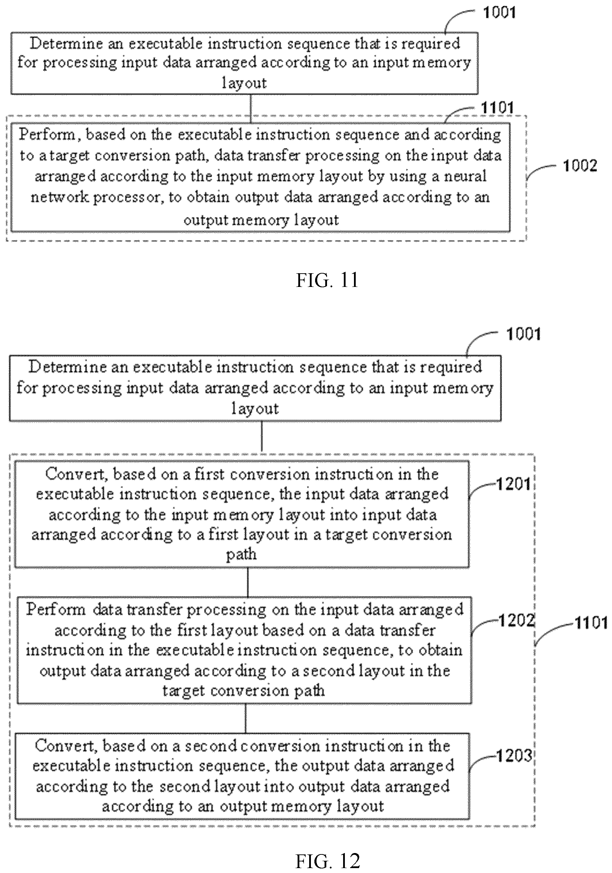

In some embodiments, as shown in FIG. 11, step 1002 may include step 1101.

Step 1101. Perform, based on the executable instruction sequence and according to a target conversion path, data transfer processing on the input data arranged according to the input memory layout by using the neural network processor, to obtain the output data arranged according to the output memory layout.

In view of the above, the executable instruction sequence is obtained based on the target conversion path. Therefore, a process of running the executable instruction sequence is equivalent to a process of executing the target conversion path. Because the target conversion path is a conversion path with shortest processing duration for the neural network processor to process the data transfer operator, the neural network processor executes the executable instruction sequence to improve processing efficiency of the process of "performing data transfer processing on the input data arranged according to the input memory layout, to obtain the output data arranged according to the output memory layout".

According to the method for processing input data through a neural network processor provided in the embodiments of this disclosure, the neural network processor performs data transfer processing on the input data arranged according to the input memory layout based on the target conversion path, to obtain the output data arranged according to the output memory layout. Because the target conversion path is the conversion path with the shortest processing duration for processing the data transfer operator, the data transfer operator can be processed efficiently.

In some embodiments, as shown in FIG. 12, step 1101 may include steps 1201 to 1203.

Step 1201. Convert, based on a first conversion instruction in the executable instruction sequence, the input data arranged according to the input memory layout into input data arranged according to a first layout in the target conversion path.

In combination with the foregoing solutions in FIG. 3 to FIG. 9, the input data arranged according to the input memory layout may be converted into the input data arranged according to the first layout in the target conversion path by executing the first conversion instruction in the executable instruction sequence. Subsequently, output data arranged according to a second layout in the target conversion path may be obtained by using the input data arranged according to the first layout.

Step 1202. Perform data transfer processing on the input data arranged according to the first layout based on a data transfer instruction in the executable instruction sequence, to obtain output data arranged according to a second layout in the target conversion path.

After the input data arranged according to the first layout is obtained, the data transfer instruction in the executable instruction sequence may be executed again to perform data transfer processing on the input data arranged according to the first layout, so as to obtain the output data arranged according to the second layout in the target conversion path.

Step 1203. Convert, based on a second conversion instruction in the executable instruction sequence, the output data arranged according to the second layout into the output data arranged according to the output memory layout.

After the output data arranged according to the second layout in the target conversion path is obtained, the second conversion instruction in the executable instruction sequence may be executed again to convert the output data arranged according to the second layout into the output data arranged according to the output memory layout.

According to the method for processing input data through a neural network processor provided in the embodiments of this disclosure, the output data arranged according to the second layout in the target conversion path is obtained by using the first conversion instruction in the executable instruction sequence. Subsequently, the output data arranged according to the output memory layout is obtained through the data transfer instruction and the second conversion instruction in the executable instruction sequence. In this way, the data transfer operator may be processed in the shortest processing duration, thereby improving the data processing efficiency of the neural network processor.

### Exemplary apparatus

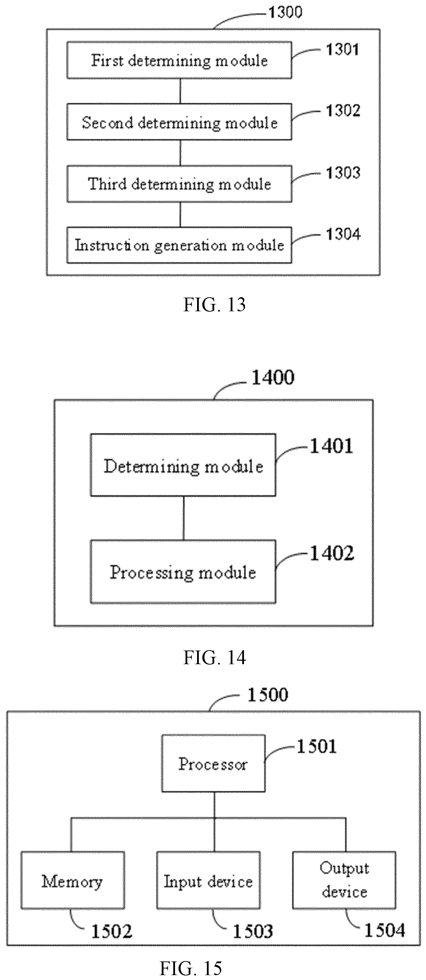

FIG. 13 shows an instruction generation apparatus for a neural network processor according to an embodiment of this disclosure. As shown in FIG. 13, an instruction generation apparatus 1300 for a neural network processor includes a first determining module 1301, a second determining module 1302, a third determining module 1303, and an instruction generation module 1304.

The first determining module 1301 is configured to determine an input memory layout and an output memory layout that correspond to a data transfer operator, and a transfer parameter of the data transfer operator.

The second determining module 1302 is configured to determine multiple conversion path groups for converting the input memory layout to the output memory layout based on the transfer parameter, the input memory layout, the output memory layout, and multiple first layouts supported by the neural network processor.

The third determining module 1303 is configured to determine a target conversion path based on the multiple conversion path groups.

The instruction generation module 1304 is configured to generate an instruction sequence executable by the neural network processor based on the target conversion path.

In some embodiments, the second determining module 1302 is further configured to for each of the first layouts, determining a corresponding second layout based on the first layout and the transfer parameter; and for each of the first layouts, determining a corresponding conversion path group based on the input memory layout, the output memory layout, the first layout, and the second layout corresponding to the first layout.

In some embodiments, the second determining module 1302 is further configured to determine, in a computational graph, multiple first sub-conversion paths for converting the input memory layout to the first layout based on the input memory layout and the first layout, wherein the computational graph is used to represent at least one conversion path corresponding to conversion of different layouts; determine, in the computational graph, multiple second sub-conversion paths for converting the output memory layout to the second layout based on the output memory layout and the second layout; and determine multiple conversion paths based on the multiple first sub-conversion paths and the multiple second sub-conversion paths, and take the multiple conversion paths as the conversion path group corresponding to the first layout.

In some embodiments, the third determining module 1303 is further configured to determine conversion duration of each conversion path in each conversion path group; and determine the conversion path with shortest conversion duration in the multiple conversion path groups to serve as the target conversion path.

In some embodiments, the third determining module 1303 is further configured to determine first conversion duration of the first sub-conversion path based on the computational graph and the first sub-conversion paths in the conversion paths; determine second conversion duration of the second sub-conversion path based on the computational graph and the second sub-conversion path in the conversion paths; and determine the conversion duration corresponding to the conversion path based on the first conversion duration and the second conversion duration.

In some embodiments, the third determining module 1303 is further configured to search the computational graph for conversion duration corresponding to each conversion manner in the first sub-conversion path by using an objective function; and determine the first conversion duration of the first sub-conversion path based on the conversion duration corresponding to each conversion manner in the first sub-conversion path.

In some embodiments, the instruction generation module 1304 is further configured to generate a first conversion instruction executable by the neural network processor based on the input memory layout and the first layout in the target conversion path; generate a data transfer instruction executable by the neural network processor based on the first layout and a second layout in the target conversion path; and generate a second conversion instruction executable by the neural network processor based on the second layout and the output memory layout, wherein the executable instruction sequence includes the first conversion instruction, the data transfer instruction, and the second conversion instruction.

FIG. 14 shows an apparatus for processing input data through a neural network processor according to an embodiment of this disclosure. As shown in FIG. 14, an apparatus 1400 for processing input data through a neural network processor includes a determining module 1401 and a processing module 1402.

The determining module 1401 is configured to determine an executable instruction sequence that is required for processing input data arranged according to an input memory layout, wherein the executable instruction sequence is generated based on a target conversion path, and the target conversion path is determined based on multiple conversion path groups for converting the input memory layout to an output memory layout.

The processing module 1402 is configured to perform, based on the executable instruction sequence, data transfer processing on the input data arranged according to the input memory layout by using the neural network processor, to obtain output data arranged according to the output memory layout.

In some embodiments, the processing module 1402 is further configured to perform, based on the executable instruction sequence and according to the target conversion path, data transfer processing on the input data arranged according to the input memory layout by using the neural network processor, to obtain the output data arranged according to the output memory layout.

In some embodiments, the processing module 1402 is further configured to convert, based on a first conversion instruction in the executable instruction sequence, the input data arranged according to the input memory layout into input data arranged according to a first layout in the target conversion path; perform data transfer processing on the input data arranged according to the first layout based on a data transfer instruction in the executable instruction sequence, to obtain output data arranged according to a second layout in the target conversion path; and convert, based on a second conversion instruction in the executable instruction sequence, the output data arranged according to the second layout into the output data arranged according to the output memory layout.

### Exemplary electronic device

FIG. 15 is a diagram of a structure of an electronic device according to an embodiment of this disclosure. As shown in FIG. 15, an electronic device 1500 includes one or more processors 1501 and a memory 1502.

The processor 1501 may be a central processing unit (CPU) or another form of processing unit having a data processing capability and/or an instruction execution capability, and can control another component in the electronic device 1500 to perform a desired function.

The memory 1502 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1501 may execute the program instruction to implement the instruction generation method according to various embodiments of this disclosure that are described above or other desired functions.

In an example, the electronic device 1500 may further include an input device 1503 and an output device 1504. These components are connected to each other through a bus system and/or another form of connection mechanism (not shown).

Certainly, for simplicity, FIG. 15 shows only some of components in the electronic device 1500 that are related to this disclosure, and components such as a bus and an input/output interface are omitted. In addition, according to specific application situations, the electronic device 1500 may further include any other appropriate components.

### Exemplary computer program product and computer readable storage medium

In addition to the foregoing methods and devices, embodiments of this disclosure may also relate to a computer program product, which includes computer program instructions. When the computer program instructions are run by a processor, the processor is enabled to perform the steps, of the instruction generation method or other methods according to the embodiments of this disclosure, that are described in the foregoing "Exemplary methods" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the instruction generation method or other methods according to the embodiments of this disclosure, that are described in the foregoing "Exemplary methods" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, it should be pointed out that the advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

The block diagrams of the equipment, the apparatus, the device, and the system involved in this disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the methods of this disclosure may be disassembled and/or recombined. These disassembling and/or recombinations shall be regarded as equivalent solutions of this disclosure.

The foregoing description about the disclosed aspects is provided, so that this disclosure can be arrived at or carried out by any person skilled in the art. Various modifications to these aspects are very obvious to a person skilled in the art. Moreover, general principles defined herein may be applicable to other aspects without departing from the scope of this disclosure. Therefore, this disclosure is not intended to be limited to the aspects illustrated herein, but to the widest scope consistent with the principles and novel features disclosed herein.

The foregoing descriptions are given for illustration and description. In addition, the description is not intended to limit the embodiments of this disclosure to forms disclosed herein. Although a plurality of exemplary aspects and embodiments have been discussed above, a person skilled in the art may recognize certain variations, modifications, changes, additions, and sub-combinations thereof.

## Claims

1. An instruction generation method for a neural network processor, **characterized in that** the instruction generation method comprises:
determining (301) an input memory layout and an output memory layout that correspond to a data transfer operator, and a transfer parameter of the data transfer operator;
determining (302) multiple conversion path groups for converting the input memory layout to the output memory layout based on the transfer parameter, the input memory layout, the output memory layout, and multiple first layouts supported by the neural network processor;
determining (303) a target conversion path based on the multiple conversion path groups; and
generating (304) an instruction sequence executable by the neural network processor based on the target conversion path.

2. The method according to claim 1, wherein the determining (303) a target conversion path based on the multiple conversion path groups comprises:
determining (601) conversion duration of each conversion path in each conversion path group; and
determining (602) the conversion path with shortest conversion duration in the multiple conversion path groups to serve as the target conversion path.

3. The method according to claim 1 or 2, wherein the determining (302) multiple conversion path groups for converting the input memory layout to the output memory layout based on multiple first layouts supported by the neural network processor, the transfer parameter, the input memory layout, and the output memory layout comprises:
for each of the first layouts, determining (401) a corresponding second layout based on the first layout and the transfer parameter; and
for each of the first layouts, determining (402) a corresponding conversion path group based on the input memory layout, the output memory layout, the first layout, and the second layout corresponding to the first layout.

4. The method according to claim 3, wherein, for each of the first layouts, the determining a corresponding conversion path group based on the input memory layout, the output memory layout, the first layout, and the second layout corresponding to the first layout comprises:
determining (501), in a computational graph, multiple first sub-conversion paths for converting the input memory layout to the first layout based on the input memory layout and the first layout, wherein the computational graph is used to represent at least one conversion path corresponding to conversion of different layouts;
determining (502), in the computational graph, multiple second sub-conversion paths for converting the output memory layout to the second layout based on the output memory layout and the second layout; and
determining (503) multiple conversion paths based on the multiple first sub-conversion paths and the multiple second sub-conversion paths, and taking the multiple conversion paths as the conversion path group corresponding to the first layout.

5. The method according to claim 4, wherein the determining (601) conversion duration of each conversion path in each conversion path group comprises:
determining (701) first conversion duration of the first sub-conversion path based on the computational graph and the first sub-conversion path in the conversion paths;
determining (702) second conversion duration of the second sub-conversion path based on the computational graph and the second sub-conversion path in the conversion paths; and
determining (703) the conversion duration corresponding to the conversion path based on the first conversion duration and the second conversion duration.

6. The method according to claim 5, wherein the determining (701) first conversion duration of the first sub-conversion path based on the computational graph and the first sub-conversion path in the conversion paths comprises:
searching (801) the computational graph for conversion duration corresponding to conversion manners in the first sub-conversion path by using an objective function; and
determining (802) the first conversion duration of the first sub-conversion path based on the conversion duration corresponding to each conversion manner in the first sub-conversion path.

7. The method according to claim 1 or 2, wherein the generating (304) an instruction sequence executable by the neural network processor based on the target conversion path comprises:
generating (901) a first conversion instruction executable by the neural network processor based on the input memory layout and the first layout in the target conversion path;
generating (902) a data transfer instruction executable by the neural network processor based on the first layout and a second layout in the target conversion path, wherein the second layout is determined based on the first layout and the transfer parameter; and
generating (903) a second conversion instruction executable by the neural network processor based on the second layout and the output memory layout, wherein
the executable instruction sequence comprises the first conversion instruction, the data transfer instruction, and the second conversion instruction.

8. A method for processing input data through a neural network processor, **characterized in that** the method for processing input data through a neural network processor comprises:
determining (1001) an executable instruction sequence that is required for processing input data arranged according to an input memory layout, wherein the executable instruction sequence is generated based on a target conversion path, and the target conversion path is determined based on multiple conversion path groups for converting the input memory layout to an output memory layout; and
performing (1002), based on the executable instruction sequence, data transfer processing on the input data arranged according to the input memory layout by using the neural network processor, to obtain output data arranged according to the output memory layout.

9. The method according to claim 8, wherein the performing (1002), based on the executable instruction sequence, data transfer processing on the input data arranged according to the input memory layout by using the neural network processor, to obtain output data arranged according to the output memory layout comprises:
performing (1101), based on the executable instruction sequence and according to the target conversion path, data transfer processing on the input data arranged according to the input memory layout by using the neural network processor, to obtain the output data arranged according to the output memory layout.

10. The method according to claim 9, wherein the performing (1101), based on the executable instruction sequence and according to the target conversion path, data transfer processing on the input data arranged according to the input memory layout by using the neural network processor, to obtain the output data arranged according to the output memory layout comprises:
converting (1201), based on a first conversion instruction in the executable instruction sequence, the input data arranged according to the input memory layout to input data arranged according to a first layout in the target conversion path;
performing (1202) data transfer processing on the input data arranged according to the first layout based on a data transfer instruction in the executable instruction sequence, to obtain output data arranged according to a second layout in the target conversion path; and
converting (1203), based on a second conversion instruction in the executable instruction sequence, the output data arranged according to the second layout to the output data arranged according to the output memory layout.

11. An instruction generation apparatus (1300) for a neural network processor, **characterized in that** the instruction generation apparatus comprises:
a first determining module (1301), configured to determine an input memory layout and an output memory layout that correspond to a data transfer operator, and a transfer parameter of the data transfer operator;
a second determining module (1302), configured to determine multiple conversion path groups for converting the input memory layout to the output memory layout based on the transfer parameter, the input memory layout, the output memory layout, and multiple first layouts supported by the neural network processor;
a third determining module (1303), configured to determine a target conversion path based on the multiple conversion path groups; and
an instruction generation module (1304), configured to generate an instruction sequence executable by the neural network processor based on the target conversion path.

12. The instruction generation apparatus according to claim 11, wherein the third determining module (1303) is further configured to determine conversion duration of each conversion path in each conversion path group; and determine the conversion path with shortest conversion duration in the multiple conversion path groups to serve as the target conversion path.

13. The instruction generation apparatus according to claim 11, wherein the instruction generation module (1304) is further configured to generate a first conversion instruction executable by the neural network processor based on the input memory layout and the first layout in the target conversion path; generate a data transfer instruction executable by the neural network processor based on the first layout and a second layout in the target conversion path; and generate a second conversion instruction executable by the neural network processor based on the second layout and the output memory layout, wherein the executable instruction sequence includes the first conversion instruction, the data transfer instruction, and the second conversion instruction.

14. A computer readable storage medium, **characterized in that** the storage medium stores a computer program, and the computer program is used for implementing the instruction generation method for a neural network processor according to any one of claims 1 to 7 or for implementing the method for processing input data through a neural network processor according to any one of claims 8 to 10.

15. An electronic device (1500), **characterized in that** the electronic device comprises:
a processor (1501); and
a memory (1502), configured to store processor-executable instructions, wherein
the processor (1501) is configured to read the executable instructions from the memory (1502), and execute the instructions to implement the instruction generation method for a neural network processor according to any one of claims 1 to 7 or to implement the method for processing input data through a neural network processor according to any one of claims 8 to 10.
